(19) Europäisches Patentamt / European Patent Office / Office européen des brevets

(11) **EP 4 296 088 B1**

(12) **EUROPEAN PATENT SPECIFICATION**

(45) Date of publication and mention
of the grant of the patent:
**09.10.2024 Bulletin 2024/41**

(21) Application number: **23174542.3**

(22) Date of filing: **22.05.2023**

(51) International Patent Classification (IPC):
**B60C 11/00** (2006.01)

(52) Cooperative Patent Classification (CPC):
**B60C 11/0058; B60C 11/0041;** B60C 2011/0025

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.06.2022 JP 2022101494**

(43) Date of publication of application:
**27.12.2023 Bulletin 2023/52**

(73) Proprietor: **Sumitomo Rubber Industries, Ltd.
Kobe-shi, Hyogo-ken 651-0072 (JP)**

(72) Inventor: **OHTE, Yuto
Kobe-shi 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 565 056          EP-A1- 2 990 227
EP-A1- 3 208 110          WO-A1-2021/215279
DE-T5- 112013 001 701     JP-A- 2018 002 008**

**Description**

BACKGROUND OF THE INVENTION

Field of the Invention

The present invention relates to a tire.

Background Art

A tire having low rolling resistance is obtained when a rubber that has low-heat generation properties is used for a tread. The rubber that has low-heat generation properties is inferior to a rubber that has heat generation properties, in terms of grip force. Therefore, when a rubber that has low-heat generation properties is used for a tread, for example, grip performance on a wet road surface (hereinafter, also referred to as wet performance) is decreased. It is difficult to balance rolling resistance and wet performance well. Various studies have been made in order to achieve reduction of rolling resistance and improvement of wet performance (for example, Japanese Laid-Open Patent Publication No. 2018-2008). Related technologies are also known from EP 3 208 110 A1, WO 2021/215279 A1, and EP 2 565 056 A1, wherein EP3 208 110 A1 is showing the features of the preamble of claim 1.

Normally, in a tread, a rubber that has heat generation properties and for which grip performance is taken into consideration is used for a cap layer which forms a tread surface, and a rubber (hereinafter, base rubber) that has low-heat generation properties and for which rolling resistance is taken into consideration is used for a base layer which is located radially inward of the cap layer.

In order to further reduce rolling resistance and further improve wet performance, forming the cap layer of the tread using two rubbers (a cap rubber and an intermediate rubber) that have higher heat generation properties than the base rubber and that have different heat generation properties is considered. The intermediate rubber is a rubber that is less likely to generate heat than the cap rubber and that is more likely to generate heat than the base rubber.

In consideration of running on a wet road surface, grooves are formed on the tread. Due to use, the tread wears off and the groove volume decreases. The drainage performance of the tire decreases, and the amount of water that exists between a road surface and the tread surface increases. If the amount of the water exceeds a certain amount, a situation in which the difference between the heat generation properties of the rubbers is less likely to be reflected in wet performance, arises.

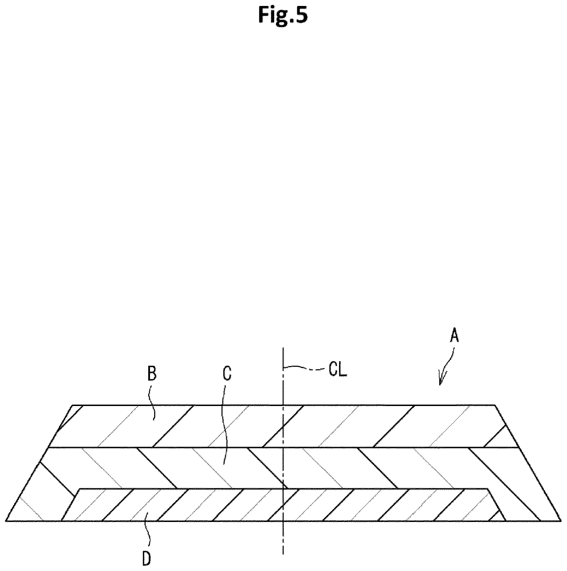

The tread created in consideration of this point is a tread A shown in FIG. 5. The tread A includes an outer layer B, an intermediate layer C, and an inner layer D in order from the radially outer side. The outer layer B is composed of the cap rubber, the intermediate layer C is composed of the intermediate rubber, and the inner layer D is composed of the base rubber.

In the tread A, a portion where the difference between the heat generation properties of the rubbers is less likely to be reflected in wet performance is composed of the intermediate rubber which is less likely to generate heat than the cap rubber. According to the tread A, it is expected that rolling resistance can be reduced while a decrease in wet performance is suppressed.

Meanwhile, as for the degree of contribution of the tread in the axial direction to wet performance, the degree of contribution of a center portion is higher than the degree of contribution of each outer portion. When this point is taken into consideration, the importance of forming the entire outer layer B using the cap rubber which has high-heat generation properties as in the tread A is not so high. There is room for improvement of the outer layer B of the tread A in terms of reducing rolling resistance.

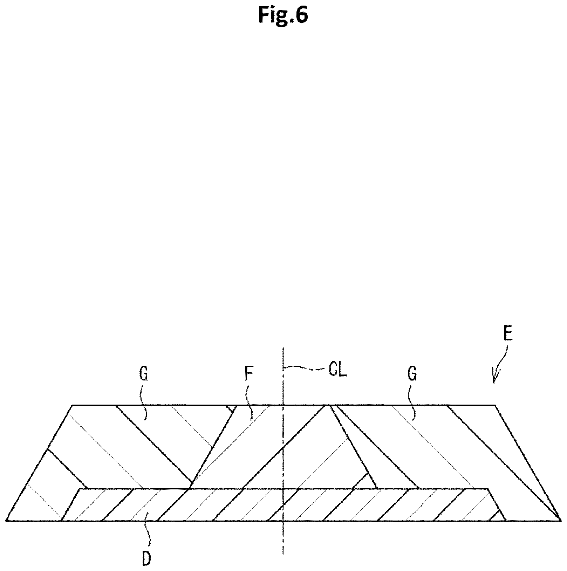

The tread created in consideration of the degree of contribution of the tread in the axial direction to wet performance is a tread E shown in FIG. 6. In the tread E, a portion other than the inner layer D in FIG. 5, that is, a portion corresponding to the above-described cap layer, is divided into three parts in the axial direction, a center portion F located at the center is composed of the cap rubber, and each side portion G located outward of the center portion F is composed of the intermediate rubber.

In the tread E, each side portion G having a low degree of contribution to wet performance is composed of the intermediate rubber. Therefore, in the tread E as well, it is expected that rolling resistance can be reduced. However, when attention is paid to the center portion F, the cap rubber is located in a portion where the difference between the heat generation properties of the rubbers is less likely to be reflected in wet performance. There is also room for improvement of the center portion F of the tread E in terms of reducing rolling resistance.

In both the tread A shown in FIG. 5 and the tread E shown in FIG. 6, it is expected that by reconsidering the configurations thereof, the volume of the cap rubber which has high-heat generation properties can be decreased, and further reduction of rolling resistance can be achieved while a decrease in wet performance is reduced to be small.

The present invention has been made in view of such circumstances. An object of the present invention is to provide a tire that can achieve reduction of rolling resistance while suppressing a decrease in wet performance.

SUMMARY OF THE INVENTION

The present invention is set out in the appended claims. A tire according to the present invention includes a tread configured to come into contact with a road surface at a tread surface thereof. The tread includes a cap rubber, an intermediate rubber, and a base rubber having different loss tangents at 30°C. The loss tangent at 30°C of the cap rubber is higher than the loss tangent at 30°C of the intermediate rubber, and the loss tangent at 30°C of the intermediate rubber is higher than the loss tangent at 30°C of the base rubber. The tread includes a center portion and a pair of side portions located axially outward of the center portion. The center portion includes an outer center portion, an intermediate center portion located radially inward of the outer center portion, and an inner center portion located radially inward of the intermediate center portion. Each of the side portions includes an outer side portion and an inner side portion located radially inward of the outer side portion. The outer center portion is composed of the cap rubber, the intermediate center portion and the outer side portions are composed of the intermediate rubber, and the inner center portion and the inner side portions are composed of the base rubber. The tread surface includes an outer surface of the outer center portion and outer surfaces of the outer side portions.

According to the present invention, a tire that can achieve reduction of rolling resistance while suppressing a decrease in wet performance, is obtained.

BRIEF DESCRIPTION OF THE DRAWINGS

FIG. 1 is a cross-sectional view showing a part of a tire according to an embodiment of the present invention;
FIG. 2 is a cross-sectional view showing a contour line of a shoulder portion;
FIG. 3 is a cross-sectional view showing the configuration of a tread;
FIG. 4 is a cross-sectional view showing the configuration of the tread at a center portion;
FIG. 5 is a cross-sectional view showing a configuration example of a conventional tread; and
FIG. 6 is a cross-sectional view showing another configuration example of the conventional tread.

DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. In the present disclosure, the tire fitted on the rim is a tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to a pressure equal to 92% of the standardized internal pressure, and no load is applied to the tire is referred to as standard state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section (hereinafter, reference cut plane) of the tire obtained by cutting the tire along a plane including a rotation axis. In this measurement, the distance between right and left beads is set so as to be equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, the "nominal aspect ratio" is the "nominal aspect ratio" included in "tyre designation" specified in JIS D4202 "Automobile tyres - Designation and dimensions".

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof. A center portion of the tread portion is also referred to as crown portion. A portion at each end of the tread portion is also referred to as shoulder portion. A boundary portion between the tread portion and each sidewall portion is also referred to as buttress.

In the present invention, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a loss tangent (tan$\delta$) of a component formed from a crosslinked rubber, from among the components included in the tire, is measured according to the standards of JIS K6394. The measurement conditions are as follows.

$$\text{Initial strain} = 10\%$$

$$\text{Dynamic strain} = \pm 1\%$$

$$\text{Frequency} = 10 \text{ Hz}$$

$$\text{Mode} = \text{stretch mode}$$

$$\text{Temperature} = 30°C$$

In this measurement, a test piece (a length of 20 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 30°C.

[Outline of Embodiments of Present Invention]

[Configuration 1]

A tire according to an aspect of the present invention includes a tread configured to come into contact with a road surface at a tread surface thereof, wherein the tread includes a cap rubber, an intermediate rubber, and a base rubber having different loss tangents at 30°C, the loss tangent at 30°C of the cap rubber is higher than the loss tangent at 30°C of the intermediate rubber, the loss tangent at 30°C of the intermediate rubber is higher than the loss tangent at 30°C of the base rubber, the tread includes a center portion and a pair of side portions located axially outward of the center portion, the center portion includes an outer center portion, an intermediate center portion located radially inward of the outer center portion, and an inner center portion located radially inward of the intermediate center portion, each of the side portions includes an outer side portion and an inner side portion located radially inward of the outer side portion, the outer center portion is composed of the cap rubber, the intermediate center portion and the outer side portions are composed of the intermediate rubber, the inner center portion and the inner side portions are composed of the base rubber, and the tread surface includes an outer surface of the outer center portion and outer surfaces of the outer side portions.

By forming the tire as described above, a portion where the difference between the heat generation properties of the rubbers is less likely to be reflected in wet performance is composed of the intermediate rubber having a lower degree of contribution to wet performance than the cap rubber. Therefore, even when the intermediate center portion which is located radially inward of the outer center portion is composed of the intermediate rubber, the tread of the tire can exhibit substantially the same level of wet performance as the tread E shown in FIG. 6. Since the intermediate center portion is composed of the intermediate rubber which is less likely to generate heat than the cap rubber, the volume of the cap rubber is effectively reduced in the tread of the tire as compared to that of the tread E. In the tire, rolling resistance that is even lower than the rolling resistance of a conventional tire having the tread E is obtained.

Furthermore, in the tire, the outer side portion is composed of the intermediate rubber. The importance of forming an axially outer portion of the tread using the cap rubber is not so high. Thus, even when the axially outer portion of the tread, that is, the outer side portion, is composed of the intermediate rubber, the tread of the tire can exhibit substantially the same level of wet performance as the tread of a conventional tire in which the outer side portion is composed of the cap rubber, specifically, the tread A shown in FIG. 5. Since the outer side portion is composed of the intermediate rubber, the volume of the cap rubber is effectively reduced in the tread of the tire as compared to that of the tread A. In the tire, rolling resistance that is even lower than the rolling resistance of the conventional tire having the tread A is obtained.

The tire can achieve reduction of rolling resistance while suppressing a decrease in wet performance.

In the tire described in [Configuration 1] above, when a nominal aspect ratio of the tire is not less than 60%, a ratio of a width of the outer surface of the outer center portion to a width of the tread is not less than 20% and not greater than 40%; when the nominal aspect ratio is not less than 45% and less than 60%, the ratio of the width of the outer surface of the outer center portion to the width of the tread is not less than 30% and not greater than 60%; and when the nominal aspect ratio is less than 45%, the ratio of the width of the outer surface of the outer center portion to the width of the tread is not less than 60% and not greater than 80%.

By forming the tire as described above, wet performance and rolling resistance are well balanced. The tire can achieve reduction of rolling resistance while suppressing a decrease in wet performance.

[Configuration 2]

Preferably, in the tire described in [Configuration 1] or [Configuration 2] above, a ratio of a thickness of the outer center portion to a total thickness of the outer center portion and the intermediate center portion is not less than 50% and not greater than 70%.

By forming the tire as described above, wet performance and rolling resistance are well balanced. The tire can achieve reduction of rolling resistance while suppressing a decrease in wet performance.

[Configuration 3]

Preferably, in the tire described in any one of [Configuration 1] to [Configuration 3] above, a ratio of the loss tangent at 30°C of the intermediate rubber to the loss tangent at 30°C of the cap rubber is not less than 50% and not greater than 70%.

By forming the tire as described above, wet performance and rolling resistance are well balanced while grip performance on a dry road surface (hereinafter, dry performance) is appropriately maintained. The tire can achieve reduction of rolling resistance while suppressing not only a decrease in wet performance but also a decrease in dry performance.

[Details of Embodiments of Present Invention]

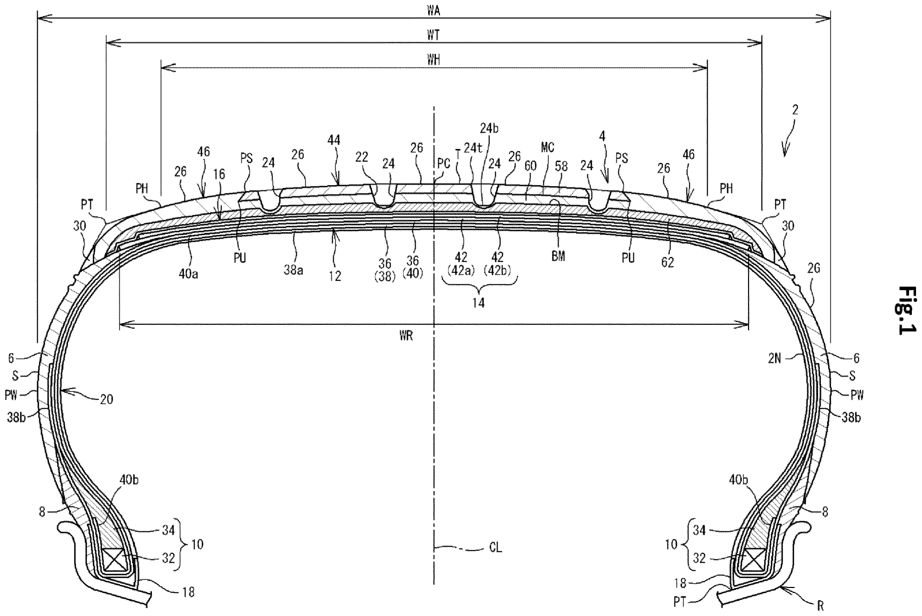

FIG. 1 shows a part of a tire 2 according to an embodiment of the present invention. The tire 2 is a pneumatic tire for a passenger car.

FIG. 1 shows a part of a cross-section (hereinafter, meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R (standardized rim). The interior of the tire 2 is filled with air to adjust the internal pressure of the tire 2.

In FIG. 1, a position indicated by reference character PC is the point of intersection of an outer surface 2G (specifically, a tread surface described later) of the tire 2 and the equator plane CL. The point of intersection PC is the equator of the tire 2. In the case where a groove is located on the equator plane CL, the equator PC is specified on the basis of a virtual outer surface obtained on the assumption that no groove is provided thereon. The equator PC is also a radially outer end of the tire 2.

In FIG. 1, a position indicated by reference character PW is an axially outer end (hereinafter, outer end PW) of the tire 2. In the case where decorations such as patterns and letters are present on the outer surface 2G of the tire 2, the outer end PW is specified on the basis of a virtual outer surface obtained on the assumption that the decorations are not present thereon.

In FIG. 1, a length indicated by reference character WA is the distance in the axial direction from a first outer end PW to a second outer end PW. The distance WA in the axial direction is the maximum width of the tire 2. Each outer end PW is a position (maximum width position) at which the tire 2 has the maximum width WA. The maximum width WA obtained in the standardized state is the cross-sectional width (see JATMA or the like) of the tire 2.

In FIG. 1, a position indicated by reference character PT is a toe of the tire 2. The toe PT is the boundary between the outer surface 2G and an inner surface 2N of the tire 2.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 is formed from a crosslinked rubber. The tread 4 is located radially outward of the carcass 12. The tread 4 comes into contact with a road surface at a tread surface T thereof.

The tread surface T is a part of the outer surface 2G of the tire 2. Side surfaces S are connected to the tread surface T. The outer surface 2G of the tire 2 includes the tread surface T and a pair of the side surfaces S.

In FIG. 1, each position indicated by reference character PH is a position on the tread surface T. The position PH corresponds to an axially outer end of a ground-contact surface of the tire 2 that is in contact with a road surface.

The ground-contact surface for specifying the position PH is obtained, for example, using a ground-contact surface shape measuring device (not shown). The ground-contact surface is obtained when a load equal to 70% of the standardized load is applied as a vertical load to the tire 2 in the standard state and the tire 2 is brought into contact with a flat surface, with the camber angle of the tire 2 being set to 0°, on this device. Although not shown, in the tire 2, the ground-contact surface obtained thus is a standard ground-contact surface, and a position, on the tread surface T, corresponding to an axially outer end of the standard ground-contact surface is the above-described position PH. The position PH is a standard ground-contact end PH. In FIG. 1, a length indicated by reference character WH is the distance in the axial direction from a first standard ground-contact end PH to a second standard ground-contact end PH. The distance WH in the axial direction is a standard ground-contact width of the tire 2, and is measured on the tire 2 in the standard state.

Grooves 22 are formed on the tread 4. Accordingly, a tread pattern is formed.

The grooves 22 forming the tread pattern include circumferential grooves 24 continuously extending in the circumferential direction. In the tire 2, at least three circumferential grooves 24 are formed on the tread 4. Accordingly, at least four land portions 26 are formed in the tread 4. In the tire 2 shown in FIG. 1, four circumferential grooves 24 are formed on the tread 4, and five land portions 26 are formed.

Each circumferential groove 24 has a groove width and a groove depth substantially equal to those of a circumferential groove of a conventional tire.

Each sidewall 6 is located radially inward of the tread 4. The sidewall 6 is located axially outward of the carcass 12. The sidewall 6 is formed from a crosslinked rubber for which cut resistance is taken into consideration.

A wing 30 is located between the sidewall 6 and the tread 4. The wing 30 joins the tread 4 and the sidewall 6. The wing 30 is formed from a crosslinked rubber for which adhesiveness is taken into consideration.

Each clinch 8 is located inward of the sidewall 6 in the radial direction. The clinch 8 comes into contact with the rim R. The clinch 8 is formed from a crosslinked rubber for which abrasion resistance is taken into consideration.

Each bead 10 is located inward of the clinch 8 in the axial direction. The bead 10 includes a core 32 and an apex 34. Although not shown, the core 32 includes a wire made of steel.

The apex 34 is located outward of the core 32 in the radial direction. The apex 34 is tapered outward. The apex 34 is formed from a crosslinked rubber that has high stiffness.

The carcass 12 is located inward of the tread 4, the pair of sidewalls 6, and the pair of clinches 8. The carcass 12 extends on and between the pair of beads 10, that is, on and between a first bead 10 and a second bead 10. The carcass 12 includes at least one carcass ply 36.

The carcass 12 of the tire 2 includes two carcass plies 36. Each carcass ply 36 includes a large number of carcass cords aligned with each other, which are not shown. These carcass cords intersect the equator plane CL. The carcass 12 of the tire 2 has a radial structure. The carcass cords are cords formed from an organic fiber. Examples of the organic fiber include nylon fibers, rayon fibers, polyester fibers, and aramid fibers.

Of the two carcass plies 36, the carcass ply 36 located radially inward on the inner side of the tread 4 is a first carcass ply 38. The carcass ply 36 located radially outward of the first carcass ply 38 on the inner side of the tread 4 is a second carcass ply 40.

The first carcass ply 38 includes a first ply body 38a and a pair of first turned-up portions 38b. The first ply body 38a extends between the pair of beads 10. Each first turned-up portion 38b is connected to the first ply body 38a and turned up around the bead 10 from the inner side toward the outer side in the axial direction.

The second carcass ply 40 includes a second ply body 40a and a pair of second turned-up portions 40b. The second ply body 40a extends between the pair of beads 10. Each second turned-up portion 40b is connected to the second ply body 40a and turned up around the bead 10 from the inner side toward the outer side in the axial direction.

In the tire 2, an end of the first turned-up portion 38b is located radially outward of the maximum width position PW. An end of the second turned-up portion 40b is located radially inward of the maximum width position PW. The end of the second turned-up portion 40b is located between an outer end of the apex 34 and the core 32 in the radial direction.

The second turned-up portion 40b is located axially inward of the first turned-up portion 38b. The end of the second turned-up portion 40b is interposed between the apex 34 and the first turned-up portion 38b.

The belt 14 is located radially inward of the tread 4. The belt 14 is located radially outward of the carcass 12. The belt 14 is stacked on the carcass 12.

In FIG. 1, a length indicated by reference character WR is the axial width of the belt 14. The axial width WR is the distance in the axial direction from a first end to a second end of the belt 14. In the tire 2, the axial width WR of the belt 14 is not less than 65% and not greater than 85% of the maximum width WA. The above-described equator plane CL intersects the belt 14 at the center of the axial width WR of the belt 14.

The belt 14 includes at least two layers 42 stacked in the radial direction. The belt 14 of the tire 2 is composed of two layers 42 stacked in the radial direction. Of the two layers 42, the layer 42 located on the inner side is an inner layer 42a, and the layer 42 located on the outer side is an outer layer 42b. As shown in FIG. 1, the inner layer 42a is wider than the outer layer 42b. The length from the end of the outer layer 42b to the end of the inner layer 42a is not less than 3 mm and not greater than 10 mm.

Each of the inner layer 42a and the outer layer 42b includes a large number of belt cords aligned with each other, which are not shown. Each belt cord is inclined relative to the equator plane CL. The material of each belt cord is steel.

The band 16 is located between the tread 4 and the belt 14 in the radial direction. The band 16 is stacked on the belt 14. The tread 4 is stacked on the band 16.

The band 16 includes a helically wound band cord which is not shown. The band cord extends substantially in the circumferential direction. Specifically, an angle of the band cord with respect to the circumferential direction is not greater than 5°. The band 16 has a jointless structure. In the tire 2, a cord formed from an organic fiber is used as the band cord. Examples of the organic fiber include nylon fibers, rayon fibers, polyester fibers, and aramid fibers.

The band 16 of the tire 2 is composed of a full band. The above-described equator plane CL intersects the band 16 at the center of the axial width of the band 16. The band 16 is wider than the belt 14. The length from the end of the belt 14 to the end of the band 16 is not less than 3 mm and not greater than 7 mm. The band 16 may include a pair of edge bands that are spaced apart from each other in the axial direction and cover the ends of the full band and the ends of the belt 14. The band 16 may be composed of a pair of edge bands only.

Each chafer 18 is located radially inward of the bead 10. The chafer 18 comes into contact with the rim R. The chafer 18 of the tire 2 includes a fabric and a rubber with which the fabric is impregnated.

The inner liner 20 is located inward of the carcass 12. The inner liner 20 forms the inner surface 2N of the tire 2. The inner liner 20 is formed from a crosslinked rubber that has a low gas permeability coefficient. The inner liner 20 maintains the internal pressure of the tire 2.

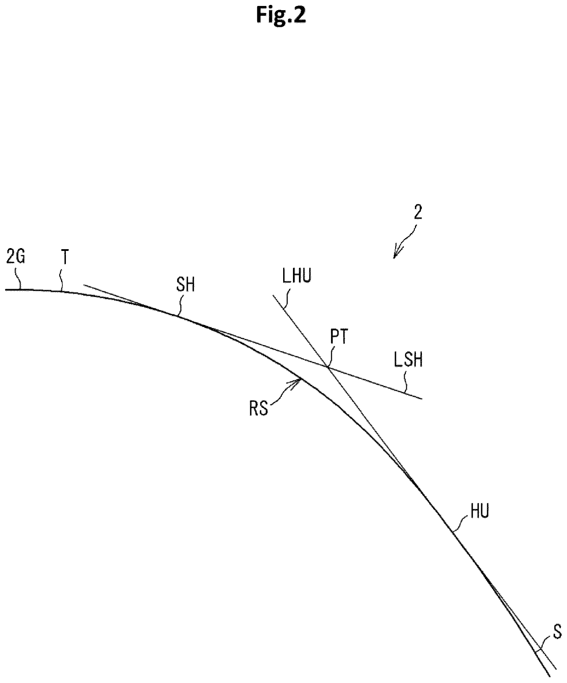

FIG. 2 shows a part of a contour line of the outer surface 2G in the meridian cross-section of the tire 2. In the present invention, the contour line of the outer surface 2G is represented by a virtual outer surface obtained on the assumption that no grooves and no decorations such as patterns and characters are present thereon.

Although not described in detail, the contour line of the outer surface 2G is obtained by measuring the outer surface shape of the tire 2 in the standard state, for example, using a displacement sensor.

In the meridian cross-section, the contour line of the tread surface T includes a plurality of arcs aligned in the axial direction. Among the plurality of arcs, the arc located on the outermost side in the axial direction is a shoulder arc. In FIG. 2, a portion indicated by reference character RS is a portion represented by the shoulder arc.

The shoulder arc has a smallest radius among the plurality of arcs included in the contour line of the tread surface T. The contour line of the tread surface T includes a pair of shoulder arcs. Contour lines of the side surfaces S are connected to the respective shoulder arcs.

Of the contour line of the tread surface T, a portion other than the shoulder arcs is referred to as main contour line. Although not described in detail, the main contour line is composed of a plurality of arcs aligned in the axial direction.

In FIG. 2, reference character HU indicates an outer end of the shoulder arc. The outer end HU is the boundary between the shoulder arc and the contour line of the side surface S. Reference character SH indicates an inner end of the shoulder arc. The inner end SH is the boundary between the shoulder arc and the main contour line.

In FIG. 2, a straight line LSH is a tangent line that is tangent to the shoulder arc at the boundary SH. A straight line LHU is a tangent line that is tangent to the shoulder arc at the boundary HU. Reference character PT is the point of intersection of the tangent line LSH and the tangent line LHU. In the present invention, the point of intersection PT is a standard end.

In FIG. 1, a length indicated by a double-headed arrow WT is the width (hereinafter, tread width) of the tread 4. The tread width WT is the distance in the axial direction from a first tread standard end PT to a second tread standard end PT. The tread width WT is measured in the tire 2 in the standard state.

In the tire 2, the ratio (WT/WA) of the tread width WT to the maximum width WA is not less than 70% and not greater than 90%. The ratio (WH/WT) of the ground-contact width WH of the standard ground-contact surface to the tread width WT is not less than 70% and not greater than 90%.

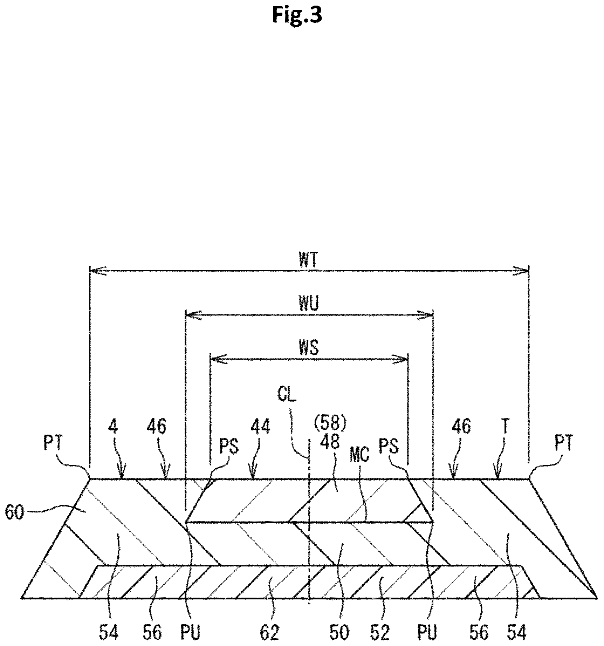

FIG. 3 is a cross-sectional view of the tread 4 of the tire 2. FIG. 3 schematically shows the configuration of the tread 4. In FIG. 3, the right-left direction is the axial direction of the tire 2, and the up-down direction is the radial direction of the tire 2. The upper side of the surface of the drawing sheet of FIG. 3 is the radially outer side, and the lower side thereof is the radially inner side. The direction perpendicular to the surface of the drawing sheet of FIG. 3 is the circumferential direction of the tire 2.

The tread 4 of the tire 2 includes three types of crosslinked rubbers, that is, a cap rubber, an intermediate rubber, and a base rubber, having different loss tangents LT at 30°C. The tread 4 is composed of the cap rubber, the intermediate rubber, and the base rubber. Although not described in detail, the loss tangents of the cap rubber, the intermediate rubber, and the base rubber are controlled by adjusting the compositions of rubber compositions for the respective crosslinked rubbers.

In the tire 2, a loss tangent LTc at 30°C of the cap rubber is higher than a loss tangent LTm at 30°C of the intermediate rubber. The loss tangent LTm at 30°C of the intermediate rubber is higher than a loss tangent LTb at 30°C of the base rubber. Of the three types of the crosslinked rubbers included in the tread 4, the cap rubber is most likely to generate heat. The base rubber is least likely to generate heat. The intermediate rubber is less likely to generate heat than the cap rubber, and is more likely to generate heat than the base rubber.

The tread 4 of the tire 2 includes a center portion 44 and a pair of side portions 46.

The center portion 44 is located at the center in the axial direction. The center portion 44 is composed of three layers aligned in the radial direction. The layer located on the outer side in the radial direction is an outer center portion 48. The layer located radially inward of the outer center portion 48 is an intermediate center portion 50. The layer located radially inward of the intermediate center portion 50 is an inner center portion 52. The center portion 44 includes the outer center portion 48, the intermediate center portion 50, and the inner center portion 52.

Each side portion 46 is located axially outward of the center portion 44. The side portion 46 is composed of two layers aligned in the radial direction. The layer located on the outer side in the radial direction is an outer side portion 54. The layer located radially inward of the outer side portion 54 is an inner side portion 56. The side portion 46 includes the outer side portion 54 and the inner side portion 56.

The outer center portion 48 of the tire 2 is composed of the cap rubber. Of the tread 4, a portion composed of the outer center portion 48 is also referred to as cap layer 58.

The intermediate center portion 50 and the outer side portions 54 are composed of the intermediate rubber. Of the tread 4, a portion composed of the intermediate center portion 50 and the pair of outer side portions 54 is also referred to as intermediate layer 60.

The inner center portion 52 and the inner side portions 56 are composed of the base rubber. Of the tread 4, a portion composed of the inner center portion 52 and the pair of inner side portions 56 is also referred to as base layer 62.

The tread 4 includes the cap layer 58, the intermediate layer 60, and the base layer 62.

As shown in FIG. 1, the base layer 62 covers the belt 14 and the band 16. The intermediate layer 60 covers the base layer 62. The entirety of the base layer 62 is covered with the intermediate layer 60. The cap layer 58 is embedded in the intermediate layer 60 in a state where the outer surface of the cap layer 58 is exposed.

In the tire 2, the base layer 62 has an axial width equal to the axial width of the band 16. The axial width of the base layer 62 is smaller than the axial width of the intermediate layer 60 and is larger than the axial width of the cap layer 58.

In the tire 2, the tread surface T includes the outer surface of the cap layer 58 and the outer surface of the intermediate layer 60. In other words, the tread surface T includes the outer surface of the outer center portion 48 and the outer surfaces of the outer side portions 54. In FIG. 3, each position indicated by reference character PS is an end of the outer surface of the outer center portion 48, and is the boundary between the outer center portion 48 and the outer side portion 54 in the tread surface T. As shown in FIG. 1, the boundary PS is located axially inward of the standard ground-contact end PH.

In the center portion 44, a boundary MC between the outer center portion 48 and the intermediate center portion 50 is located between a groove opening 24t and a groove bottom 24b of each circumferential groove 24. In FIG. 1, each position indicated by reference character PU is an end of the boundary MC. A boundary BM between the intermediate center portion 50 and the inner center portion 52 is located radially inward of the groove bottom 24b in a portion at each circumferential groove 24, but is located radially outward of the groove bottom 24b in a portion at each land portion 26.

In consideration of running on a wet road surface, grooves are formed on a tread as on the tread 4 of the tire 2. Due to use, the tread wears off and the groove volume thereof decreases. The drainage performance of the tire decreases, and the amount of water that exists between a road surface and the tread surface increases. If the amount of the water exceeds a certain amount, a situation in which the difference between the heat generation properties of the rubbers is less likely to be reflected in wet performance, arises. If, due to wear, the groove depth of each circumferential groove is in the range of not less than 75% and not greater than 85% of the groove depth in a new tire, a situation in which the difference between the heat generation properties of the rubbers is less likely to be reflected in wet performance, tends to arise.

In the tire 2, the center portion 44 includes the outer center portion 48, the intermediate center portion 50, and the inner center portion 52 in order from the radially outer side.

As described above, the intermediate center portion 50 is composed of the intermediate rubber which is less likely to generate heat than the cap rubber which forms the outer center portion 48. The degree of contribution of the intermediate rubber to wet performance is lower than the degree of contribution of the cap rubber to wet performance.

However, the intermediate center portion 50 is located between the outer center portion 48 and the inner center portion 52 in the radial direction. In the tire 2, a portion where the difference between the heat generation properties of the rubbers is less likely to be reflected in wet performance is composed of the intermediate rubber. Therefore, even when the intermediate center portion 50 which is located radially inward of the outer center portion 48 is composed of the intermediate rubber, the tread 4 of the tire 2 can exhibit substantially the same level of wet performance as the tread of a conventional tire in which the intermediate center portion 50 is composed of the cap rubber, specifically, the tread E shown in FIG. 6. Since the intermediate center portion 50 is composed of the intermediate rubber, the volume of the cap rubber is effectively reduced in the tread 4 of the tire 2, as compared to that of the tread E. In the tire 2, rolling resistance that is even lower than the rolling resistance of the conventional tire having the tread E is obtained.

As for the degree of contribution of the tread in the axial direction to wet performance, the degree of contribution of a center portion is higher than the degree of contribution of each outer portion. The importance of forming an axially outer portion of the tread using the cap rubber is not as high as the importance of forming the center portion thereof using the cap rubber.

In the tire 2, the outer side portions 54 are located on both sides of the outer center portion 48. Each outer side portion 54 is composed of the intermediate rubber having a lower degree of contribution to wet performance than the cap rubber. The importance of forming an axially outer portion of the tread 4 using the cap rubber is not so high. Thus, even when the axially outer portion of the tread 4, that is, the outer side portion 54, is composed of the intermediate rubber, the tread 4 of the tire 2 can exhibit substantially the same level of wet performance as the tread of a conventional tire in which the outer side portion 54 is composed of the cap rubber, specifically, the tread A shown in FIG. 5. Since the outer side portion 54 is composed of the intermediate rubber, the volume of the cap rubber is effectively reduced in the tread 4 of the tire 2, as compared to that of the tread A. In the tire 2, rolling resistance that is even lower than the rolling resistance of the conventional tire having the tread A is obtained.

In the tire 2, as compared to the conventional tire having the tread A, rolling resistance is effectively reduced while a decrease in wet performance is reduced to be small. In the tire 2, as compared to the conventional tire having the tread E, rolling resistance is effectively reduced while a decrease in wet performance is reduced to be small. The tire 2 can achieve reduction of rolling resistance while suppressing a decrease in wet performance.

In FIG. 3, a length indicated by reference character WS is the width of the outer surface of the outer center portion 48. The width WS is the distance in the axial direction from a first boundary PS to a second boundary PS. The width WS is measured in the tire 2 in the standard state.

In the tire 2, the ratio (WS/WT) of the width WS of the outer surface of the outer center portion 48 to the tread width WT is set in the range of not less than 20% and not greater than 80%.

From the viewpoint of reducing rolling resistance, it is more preferable if the ratio (WS/WT) is smaller. However, the required rolling resistance level depends on the nominal aspect ratio. Meanwhile, from the viewpoint of improving wet performance, it is more preferable if the ratio (WS/WT) is smaller. However, even when the ratio (WS/WT) is the same, if the nominal aspect ratio is different, the degree of influence of the outer center portion 48 on wet performance is different. Therefore, in the tire 2, from the viewpoint of well balancing wet performance and rolling resistance, the ratio (WS/WT) is finely set in consideration of the nominal aspect ratio. Specifically, the ratio (WS/WT) is set as follows.

(1) Case where the nominal aspect ratio is not less than 60%.

In this case, the ratio (WS/WT) of the width WS of the outer surface of the outer center portion 48 to the tread width WT is preferably not less than 20% and not greater than 40%.

When the ratio (WS/WT) is set to be not less than 20%, the outer center portion 48 can contribute to exhibiting good wet performance. From this viewpoint, the ratio (WS/WT) is more preferably not less than 25%.

When the ratio (WS/WT) is set to be not greater than 40%, the influence of the outer center portion 48 on rolling resistance is suppressed. In the tire 2, low rolling resistance is obtained. From this viewpoint, the ratio (WS/WT) is more preferably not greater than 35%.

(2) Case where the nominal aspect ratio is not less than 45% and less than 60%.

In this case, the ratio (WS/WT) of the width WS of the outer surface of the outer center portion 48 to the tread width WT is preferably not less than 30% and not greater than 60%.

When the ratio (WS/WT) is set to be not less than 30%, the outer center portion 48 can contribute to exhibiting good wet performance. From this viewpoint, the ratio (WS/WT) is more preferably not less than 40%.

When the ratio (WS/WT) is set to be not greater than 60%, the influence of the outer center portion 48 on rolling resistance is suppressed. In the tire 2, low rolling resistance is obtained. From this viewpoint, the ratio (WS/WT) is more preferably not greater than 50%.

(3) Case where the nominal aspect ratio is less than 45%.

In this case, the ratio (WS/WT) of the width WS of the outer surface of the outer center portion 48 to the tread width WT is preferably not less than 60% and not greater than 80%.

When the ratio (WS/WT) is set to be not less than 60%, the outer center portion 48 can contribute to exhibiting good wet performance. From this viewpoint, the ratio (WS/WT) is more preferably not less than 65%.

When the ratio (WS/WT) is set to be not greater than 80%, the influence of the outer center portion 48 on rolling resistance is suppressed. In the tire 2, low rolling resistance is obtained. From this viewpoint, the ratio (WS/WT) is more preferably not greater than 75%.

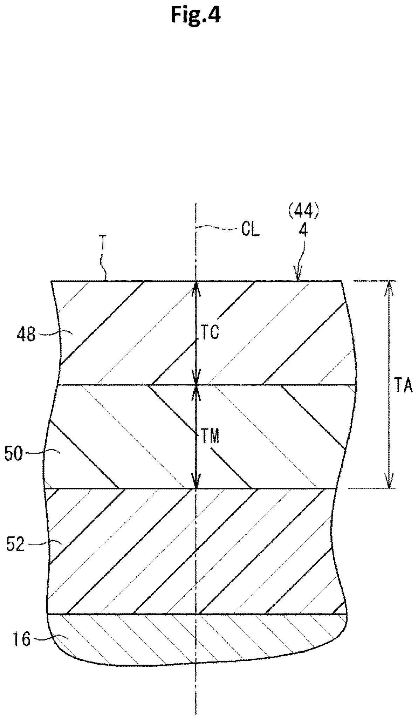

FIG. 4 shows a portion at the equator plane CL of the tire 2. FIG. 4 shows the center portion 44 of the tread 4.

In FIG. 4, a length indicated by reference character TC is the thickness of the outer center portion 48. A length indicated by reference character TM is the thickness of the intermediate center portion 50. The thickness TC and the thickness TM are measured along the equator plane CL. A length indicated by reference character TA is the total thickness of the outer center portion 48 and the intermediate center portion 50, and the total thickness TA is equal to the sum of the thickness TC and the thickness TM.

In the tire 2, the ratio (TC/TA) of the thickness TC of the outer center portion 48 to the total thickness TA of the outer center portion 48 and the intermediate center portion 50 is preferably not less than 50% and not greater than 70%.

When the ratio (TC/TA) is set to be not less than 50%, the boundary MC between the outer center portion 48 and the intermediate center portion 50 is substantially located in the portion where the difference between the heat generation properties of the rubbers is less likely to be reflected in wet performance. Thus, the influence of the intermediate center portion 50 exposed due to wear, on the wet performance, is effectively suppressed. In the tire 2, good wet performance is effectively maintained. From this viewpoint, the ratio (TC/TA) is more preferably not less than 55%.

When the ratio (TC/TA) is set to be not greater than 70%, the influence of the outer center portion 48 on rolling resistance is suppressed. In the tire 2, low rolling resistance is obtained. From this viewpoint, the ratio (TC/TA) is more preferably not greater than 65%.

As described above, the loss tangent LTc at 30°C of the cap rubber is higher than the loss tangent LTm at 30°C of the intermediate rubber. Specifically, the ratio (LTm/LTc) of the loss tangent LTm at 30°C of the intermediate rubber to the loss tangent LTc at 30°C of the cap rubber is preferably not less than 50% and not greater than 70%.

When the ratio (LTm/LTc) is set to be not less than 50%, the intermediate center portion 50 and the outer side portions 54 which are composed of the intermediate rubber, that is, the intermediate layer 60, can contribute to exhibiting grip performance of the tire 2. A change in grip performance when the intermediate center portion 50 which is composed of the intermediate rubber becomes exposed due to wear is minimized. From this viewpoint, the ratio (LTm/LTc) is more preferably not less than 55%.

When the ratio (LTm/LTc) is set to be not greater than 70%, the influence of the intermediate rubber on rolling resistance is suppressed. In the tire 2, low rolling resistance is obtained. From this viewpoint, the ratio (LTm/LTc) is more preferably not greater than 65%.

In the tire 2, the loss tangent LTc at 30°C of the cap rubber is preferably not less than 0.15. This is because the cap rubber can contribute to improvement of wet performance. From this viewpoint, the loss tangent LTc is more preferably not less than 0.16 and further preferably not less than 0.17. The cap rubber comes into contact with a road surface. From the viewpoint of improving wet performance, it is more preferable if the loss tangent LTc is higher. However, a higher loss tangent LTc causes heat generation. There is a concern that the outer center portion 48 composed of the heated cap rubber may raise the temperature of the intermediate center portion 50, which is composed of the intermediate rubber, more than expected. From the viewpoint of being able to stably keep the temperature of the entirety of the tread 4 and maintain low rolling resistance, the loss tangent LTc at 30°C of the cap rubber is preferably not greater than 0.30, more preferably not greater than 0.28, and further preferably not greater than 0.27.

The loss tangent LTm at 30°C of the intermediate rubber is preferably not greater than 0.15. This is because the intermediate rubber effectively contributes to reduction of rolling resistance. From this viewpoint, the loss tangent LTm is more preferably not greater than 0.14 and further preferably not greater than 0.13. The loss tangent LTm at 30°C of the intermediate rubber is preferably not less than 0.11. This is because the intermediate rubber can ensure required stiffness and can effectively contribute to improvement of wet performance. From this viewpoint, the loss tangent LTm is more preferably not less than 0.12.

The loss tangent LTb at 30°C of the base rubber is preferably not greater than 0.11. This is because the base rubber effectively contributes to reduction of rolling resistance. From this viewpoint, the loss tangent LTb is more preferably not greater than 0.10 and further preferably not greater than 0.09. In the tire 2, it is more preferable if the loss tangent LTb of the base rubber is lower, and thus a preferable lower limit is not set.

In the tire 2, in the meridian cross-section thereof, the outer center portion 48 has a trapezoidal cross-sectional shape. The boundary MC between the outer center portion 48 and the intermediate center portion 50 is also the inner surface of the outer center portion 48. Each end PU of the boundary MC, that is, each end PU of the inner surface of the outer center portion 48, is located axially outward of the end PS of the outer surface of the outer center portion 48. The outer center portion 48 is formed such that the axial width thereof gradually increases from the outer surface toward the inner surface thereof.

The groove volume decreases due to wear, but the exposed area of the outer center portion 48 gradually increases, whereby good wet performance is maintained. From this viewpoint, the outer center portion 48 preferably has a trapezoidal cross-sectional shape.

In FIG. 3, a length indicated by reference character WU is the width of the inner surface of the outer center portion 48. The width WU is the distance in the axial direction from a first end PU to a second end PU.

In the tire 2, the ratio (WU/WS) of the width WU of the inner surface to the width WS of the outer surface is preferably not less than 1.1 and not greater than 1.9.

When the ratio (WU/WS) is set to be not less than 1.1, the outer center portion 48 can effectively contribute to maintaining good wet performance. From this viewpoint, the ratio (WU/WS) is more preferably not less than 1.2 and further preferably not less than 1.3.

When the ratio (WU/WS) is set to be not greater than 1.9, the influence of the outer center portion 48 on rolling resistance is suppressed. In the tire 2, low rolling resistance is obtained. From this viewpoint, the ratio (WU/WS) is more preferably not greater than 1.8 and further preferably not greater than 1.7.

As described above, according to the present invention, a tire that can achieve reduction of rolling resistance while suppressing a decrease in wet performance, is obtained.

The present invention can be applied to tires having various aspect ratios, but exhibits a remarkable effect in a high-profile tire. From the viewpoint of being able to effectively achieve reduction of rolling resistance while effectively suppressing a decrease in wet performance, a higher-profile tire is preferable. Specifically, the tire to which the present invention is applied is preferably a tire having a nominal aspect ratio of not less than 45% and less than 60%, and more preferably a tire having a nominal aspect ratio of not less than 60%.

EXAMPLES

Hereinafter, the present invention will be described in further detail by means of examples, etc., but the present invention is not limited to these examples.

[Experiment 1: Influence of Ratio (WS/WT)]

[Example 1]

A pneumatic tire for a passenger car (tire size = 235/60R18) including a tread having the configuration in FIG. 3 was prepared.

The ratio (TC/TA), the ratio (WS/WT), and the ratio (LTm/LTc) were set as shown in Table 1 below.

[Comparative Example 1]

A tire of Comparative Example 1 was obtained in the same manner as Example 1, except that the tread was replaced with a tread having the configuration in FIG. 5. The ratio (TC/TA), the ratio (WS/WT), and the ratio (LTm/LTc) are as shown in Table 1 below.

[Comparative Example 2]

A tire of Comparative Example 2 was obtained in the same manner as Example 1, except that the tread was replaced with a tread having the configuration in FIG. 6. The ratio (TC/TA), the ratio (WS/WT), and the ratio (LTm/LTc) are as shown in Table 1 below.

[Examples 2 to 5]

Tires of Examples 2 to 5 were obtained in the same manner as Example 1, except that the width WS was changed such that the ratio (WS/WT) was set as shown in Table 1 below.

[Example 6]

A pneumatic tire for a passenger car (tire size = 235/50R20) including a tread having the configuration in FIG. 3 was prepared.
The ratio (TC/TA), the ratio (WS/WT), and the ratio (LTm/LTc) were set as shown in Table 2 below.

[Comparative Example 3]

A tire of Comparative Example 3 was obtained in the same manner as Example 6, except that the tread was replaced with a tread having the configuration in FIG. 5. The ratio (TC/TA), the ratio (WS/WT), and the ratio (LTm/LTc) are as shown in Table 2 below.

[Comparative Example 4]

A tire of Comparative Example 4 was obtained in the same manner as Example 6, except that the tread was replaced with a tread having the configuration in FIG. 6. The ratio (TC/TA), the ratio (WS/WT), and the ratio (LTm/LTc) are as shown in Table 2 below.

[Examples 7 to 11]

Tires of Examples 7 to 11 were obtained in the same manner as Example 6, except that the width WS was changed such that the ratio (WS/WT) was set as shown in Table 2 below.

[Example 12]

A pneumatic tire for a passenger car (tire size = 255/40R21) including a tread having the configuration in FIG. 3 was prepared.
The ratio (TC/TA), the ratio (WS/WT), and the ratio (LTm/LTc) were set as shown in Table 3 below.

[Comparative Example 5]

A tire of Comparative Example 5 was obtained in the same manner as Example 12, except that the tread was replaced with a tread having the configuration in FIG. 5. The ratio (TC/TA), the ratio (WS/WT), and the ratio (LTm/LTc) are as shown in Table 3 below.

[Comparative Example 6]

A tire of Comparative Example 6 was obtained in the same manner as Example 12, except that the tread was replaced with a tread having the configuration in FIG. 6. The ratio (TC/TA), the ratio (WS/WT), and the ratio (LTm/LTc) are as shown in Table 3 below.

[Examples 13 to 16]

Tires of Examples 13 to 16 were obtained in the same manner as Example 6, except that the width WS was changed such that the ratio (WS/WT) was set as shown in Table 3 below.

[Rolling Resistance Coefficient (RRC)]

Using a rolling resistance testing machine, a rolling resistance coefficient (RRC) was measured when each test tire ran on a drum at a speed of 80 km/h under the following conditions. The results are shown as indexes in Tables 1 to 3 below with the results of Comparative Examples 1, 3, and 5 being regarded as 100.0. The lower the value is, the lower the rolling resistance of the tire is. An index less than 100.0 was set as a target.

<Tire size = 235/60R18>

Rim: 7.0×18J
Internal pressure: 210 kPa
Vertical load: 6.86 kN

<Tire size = 235/50R20>

Rim: 7.5×20J
Internal pressure: 210 kPa
Vertical load: 6.28 kN

<Tire size = 255/40R21>

Rim: 9.0×21J
Internal pressure: 250 kPa
Vertical load: 6.67 kN

[Wet Performance (WET) of New Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a wet road surface (water film thickness = 1.4 mm) so as to perform steady cornering, and the limit speed was measured. The results are shown as indexes in the cells for "WET" in Tables 1 to 3 below with the results of Comparative Examples 1, 3, and 5 being regarded as 100.0. The higher the value is, the higher the limit speed is and the better the wet performance of the tire is. An index of 97.0 or greater was set as a target.

In the present invention, if wet performance is at an acceptable level, it is more preferable if rolling resistance is lower. Therefore, in order to evaluate that wet performance and rolling resistance are well balanced, the ratio of the index value of wet performance to the index value of rolling resistance was calculated. The results are shown as indexes in the cells for "Degree of achievement" in Tables 1 to 3 with the result of Comparative Example 1 being regarded as 100.0. A higher value indicates that both suppression of a decrease in wet performance and reduction of rolling resistance are achieved to a higher degree, that is, wet performance and rolling resistance are balanced better.

[Table 1]

|  | Comp. Ex. 1 | Comp. Ex. 2 | Ex. 1 | Ex. 2 | Ex. 3 | Ex. 4 | Ex. 5 |
|---|---|---|---|---|---|---|---|
| Tire size | 235/60R18 | | | | | | |
| Configuration | FIG. 5 | FIG. 6 | FIG. 3 | FIG. 3 | FIG. 3 | FIG. 3 | FIG. 3 |
| TC/TA [%] | 50 | 100 | 50 | 50 | 50 | 50 | 50 |
| WS/WT [%] | 100 | 50 | 50 | 40 | 30 | 20 | 10 |
| LTm/LTc [%] | 70 | 70 | 70 | 70 | 70 | 70 | 70 |
| RRC | 100.0 | 100.0 | 97.5 | 97.0 | 96.6 | 96.1 | 95.6 |
| WET | 100.0 | 99.1 | 99.1 | 99.0 | 98.5 | 98.0 | 97.0 |
| Degree of achievement | 100.0 | 99.1 | 101.6 | 102.0 | 102.0 | 102.0 | 101.5 |

[Table 2]

| | Comp. Ex. 3 | Comp. Ex. 4 | Ex. 6 | Ex. 7 | Ex. 8 | Ex. 9 | Ex. 10 | Ex. 11 |
|---|---|---|---|---|---|---|---|---|
| Tire size | 235/50R20 | | | | | | | |
| Configuration | FIG. 5 | FIG. 6 | FIG. 3 | FIG. 3 | FIG. 3 | FIG. 3 | FIG. 3 | FIG. 3 |
| TC/TA [%] | 50 | 100 | 50 | 50 | 50 | 50 | 50 | 50 |
| WS/WT [%] | 100 | 50 | 70 | 60 | 50 | 40 | 30 | 20 |
| LTm/LTc [%] | 70 | 70 | 70 | 70 | 70 | 70 | 70 | 70 |
| RRC | 100.0 | 100.0 | 98.5 | 98.0 | 97.5 | 97.0 | 96.6 | 96.1 |
| WET | 100.0 | 98.0 | 99.6 | 99.5 | 99.0 | 98.5 | 98.0 | 97.0 |
| Degree of achievement | 100.0 | 98.0 | 101.1 | 101.5 | 101.5 | 101.5 | 101.5 | 101.0 |

[Table 3]

| | Comp. Ex. 5 | Comp. Ex. 6 | Ex. 12 | Ex. 13 | Ex. 14 | Ex. 15 | Ex. 16 |
|---|---|---|---|---|---|---|---|
| Tire size | 255/40R21 | | | | | | |
| Configuration | FIG. 5 | FIG. 6 | FIG. 3 | FIG. 3 | FIG. 3 | FIG. 3 | FIG. 3 |
| TC/TA [%] | 50 | 100 | 50 | 50 | 50 | 50 | 50 |
| WS/WT [%] | 100 | 50 | 90 | 80 | 70 | 60 | 50 |
| LTm/LTc [%] | 70 | 70 | 70 | 70 | 70 | 70 | 70 |
| RRC | 100.0 | 100.0 | 99.5 | 99.0 | 98.5 | 98.0 | 97.5 |
| WET | 100.0 | 98.0 | 99.8 | 99.5 | 99.0 | 98.5 | 97.5 |
| Degree of achievement | 100.0 | 98.0 | 100.3 | 100.5 | 100.5 | 100.5 | 100.0 |

As shown in Tables 1 to 3, it is confirmed that in each Example, reduction of rolling resistance is achieved while a decrease in wet performance is suppressed.

[Experiment 2: Influence of Ratio (TC/TA)]

[Examples 17 to 21]

Tires of Examples 17 to 21 were obtained in the same manner as Example 1, except that the thickness TC was changed such that the ratio (TC/TA) was set as shown in Table 4 below.

[Rolling Resistance Coefficient (RRC)]

Using a rolling resistance testing machine, a rolling resistance coefficient (RRC) was measured when each test tire ran on a drum at a speed of 80 km/h under the following conditions. The results are shown as indexes in Table 4 below with the result of Comparative Example 1 being regarded as 100.0. The lower the value is, the lower the rolling resistance of the tire is. An index less than 100.0 was set as a target.

Rim: 7.0×18J
Internal pressure: 210 kPa
Vertical load: 6.86 kN

[Wet Performance (WET-NEW) of New Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a wet road surface (water film thickness = 1.4 mm) so as to perform steady cornering, and the limit speed was measured. The results are shown as indexes in the cells for "WET (NEW)" in Table 4 below with the result of Comparative Example 1 being regarded as 100.0. The higher the value is, the higher the limit speed is and the better the wet performance of the tire is. An index of 97.0 or greater was set as a target.

The ratio of the index value of wet performance to the index value of rolling resistance was calculated. The results are shown as indexes in the cells for "Degree of achievement" in Table 4 with the result of Comparative Example 1 being regarded as 100.0. A higher value indicates that both suppression of a decrease in wet performance and reduction of rolling resistance are achieved to a higher degree, that is, wet performance and rolling resistance are balanced better.

[Wet Performance (WET-OLD (1)) of Worn Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a dry asphalt road surface to wear the tread of each tire. The tread was worn until the groove depth of the circumferential groove reached 30% of the groove depth of the new tire. Then, the test vehicle was driven on a test course with a wet road surface (water film thickness = 1.4 mm) so as to perform steady cornering, and the limit speed was measured. The results are shown as indexes in the cells for "WET (30%)" in Table 4 below with the result of Comparative Example 1 for new tires being regarded as 100.0. The higher the value is, the higher the limit speed is and the better the wet performance of the tire is.

[Wet Performance (WET-OLD (2)) of Worn Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a dry asphalt road surface to wear the tread of each tire. The tread was worn until the groove depth of the circumferential groove reached 70% of the groove depth of the new tire. Then, the test vehicle was driven on a test course with a wet road surface (water film thickness = 1.4 mm) so as to perform steady cornering, and the limit speed was measured. The results are shown as indexes in the cells for "WET (70%)" in Table 4 below with the result of Comparative Example 1 for new tires being regarded as 100.0. The higher the value is, the higher the limit speed is and the better the wet performance of the tire is.

[Table 4]

| | | Comp. Ex. 1 | Comp. Ex. 2 | Ex. 17 | Ex. 18 | Ex. 1 | Ex. 19 | Ex. 20 | Ex. 21 |
|---|---|---|---|---|---|---|---|---|---|
| Tire size | | 235/60R18 | | | | | | | |
| Configuration | | FIG. 5 | FIG. 6 | FIG. 3 | FIG. 3 | FIG. 3 | FIG. 3 | FIG. 3 | FIG. 3 |
| TC/TA [%] | | 50 | 100 | 30 | 40 | 50 | 60 | 70 | 80 |
| WS/WT [%] | | 100 | 50 | 40 | 40 | 40 | 40 | 40 | 40 |
| LTm/LTc [%] | | 70 | 70 | 70 | 70 | 70 | 70 | 70 | 70 |
| RRC | | 100.0 | 100.0 | 96.3 | 96.7 | 97.1 | 97.5 | 97.9 | 98.3 |
| WET | NEW | 100.0 | 99.1 | 99.8 | 99.6 | 99.4 | 99.2 | 99.1 | 99.0 |
| | 30% | 82.0 | 81.0 | 77.0 | 81.0 | 81.0 | 81.0 | 81.0 | 81.0 |
| | 70% | 55.0 | 59.0 | 55.0 | 55.0 | 55.0 | 55.0 | 55.0 | 59.0 |
| Degree of achievement | | 100.0 | 99.1 | 103.7 | 103.1 | 102.4 | 101.8 | 101.2 | 100.7 |

As shown in Table 4, it is confirmed that in each Example, reduction of rolling resistance is achieved while a decrease in wet performance is suppressed.

[Experiment 3: Influence of Ratio (LTm/LTc)]

[Examples 22 to 25]

Tires of Examples 22 to 25 were obtained in the same manner as Example 1, except that the loss tangent LTm of the intermediate rubber was changed such that the ratio (LTm/LTc) was set as shown in Table 5 below.

[Rolling Resistance Coefficient (RRC)]

Using a rolling resistance testing machine, a rolling resistance coefficient (RRC) was measured when each test tire ran on a drum at a speed of 80 km/h under the following conditions. The results are shown as indexes in Table 5 below with the result of Comparative Example 1 being regarded as 100.0. The lower the value is, the lower the rolling resistance of the tire is. An index less than 100.0 was set as a target.

Rim: 7.0×18J
Internal pressure: 210 kPa
Vertical load: 6.86 kN

[Grip Performance (DRY-NEW) of New Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a dry road surface so as to perform steady cornering, and the limit speed was measured. The results are shown as indexes in the cells for "DRY (NEW)" in Table 5 below with the result of Comparative Example 1 being regarded as 100.0. The higher the value is, the higher the limit speed is and the better the grip performance of the tire is. An index of 97.0 or greater was set as a target.
The ratio of the index value of grip performance to the index value of rolling resistance was calculated. The results are shown as indexes in the cells for "Degree of achievement" in Table 5 with the result of Comparative Example 1 being regarded as 100.0. A higher value indicates that both suppression of a decrease in grip performance and reduction of rolling resistance are achieved to a higher degree, that is, grip performance and rolling resistance are balanced better.

[Grip Performance (DRY-OLD) of Worn Tires]

New test tires were fitted onto standardized rims and inflated with air to adjust the internal pressures of the tires to 230 kPa. The tires were mounted to a test vehicle (a front-wheel-drive car made in Japan and having an engine displacement of 2000 cc). The test vehicle was driven on a test course with a dry asphalt road surface to wear the tread of each tire. The tread was worn until the groove depth of the circumferential groove reached 70% of the groove depth of the new tire. Then, the test vehicle was driven on a test course with a dry road surface so as to perform steady cornering, and the limit speed was measured. The results are shown as indexes in the cells for "DRY (70%)" in Table 5 below with the result of Comparative Example 1 for new tires being regarded as 100.0. The higher the value is, the higher the limit speed is and the better the grip performance of the tire is.

[Table 5]

|  |  | Comp. Ex. 1 | Comp. Ex. 2 | Ex. 22 | Ex. 1 | Ex. 23 | Ex. 24 | Ex. 25 |
|---|---|---|---|---|---|---|---|---|
| Tire size |  | 235/60R18 | | | | | | |
| Configuration |  | FIG. 5 | FIG. 6 | FIG. 3 | FIG. 3 | FIG. 3 | FIG. 3 | FIG. 3 |
| TC/TA [%] |  | 50 | 100 | 50 | 50 | 50 | 50 | 50 |
| WS/WT [%] |  | 100 | 50 | 40 | 40 | 40 | 40 | 40 |
| LTm/LTc [%] |  | 70 | 70 | 90 | 70 | 60 | 50 | 30 |
| RRC |  | 100.0 | 100.0 | 98.8 | 97.1 | 96.3 | 95.4 | 93.8 |
| DRY | NEW | 100.0 | 99.1 | 99.0 | 99.0 | 99.0 | 99.0 | 99.0 |
|  | 70% | 55.0 | 59.0 | 55.0 | 55.0 | 54.0 | 53.0 | 49.0 |

(continued)

|  | Comp. Ex. 1 | Comp. Ex. 2 | Ex. 22 | Ex. 1 | Ex. 23 | Ex. 24 | Ex. 25 |
|---|---|---|---|---|---|---|---|
| Degree of achievement | 100.0 | 99.1 | 100.3 | 102.0 | 102.9 | 103.8 | 105.6 |

As shown in Table 5, it is confirmed that in each Example, reduction of rolling resistance is achieved while a decrease in wet performance is suppressed.

In Experiments 1 and 2, it is confirmed that in each Example, reduction of rolling resistance is achieved while a decrease in wet performance is suppressed. In Experiment 3, it is confirmed that in each Example, a decrease in grip performance is also suppressed. That is, the tire of each Example can achieve reduction of rolling resistance while suppressing not only a decrease in wet performance but also a decrease in dry performance. From the evaluation results, advantages of the present invention are clear.

The above-described technology for achieving reduction of rolling resistance while suppressing a decrease in wet performance can also be applied to various tires.

**Claims**

1.  A tire (2) comprising a tread (4) configured to come into contact with a road surface at a tread surface (T) thereof, wherein

    the tread (4) includes a cap rubber, an intermediate rubber, and a base rubber having different loss tangents (LTc, LTm, LTb),
    the loss tangent (LTc) of the cap rubber is higher than the loss tangent (LTm) at of the intermediate rubber,
    the loss tangent (LTm) of the intermediate rubber is higher than the loss tangent (LTb) of the base rubber,
    the tread (4) includes a center portion (44) and a pair of side portions (46) located axially outward of the center portion (44),
    the center portion (44) includes an outer center portion (48), an intermediate center portion (50) located radially inward of the outer center portion (48), and an inner center portion (52) located radially inward of the intermediate center portion (50),
    each of the side portions (46) includes an outer side portion (54) and an inner side portion (56) located radially inward of the outer side portion (54),
    the outer center portion (48) is composed of the cap rubber,
    the intermediate center portion (50) and the outer side portions (54) are composed of the intermediate rubber,
    the inner center portion (52) and the inner side portions (56) are composed of the base rubber, and
    the tread surface (T) includes an outer surface of the outer center portion (48) and outer surfaces of the outer side portions (54);

    **characterized in that**

    when a nominal aspect ratio of the tire (2) is not less than 60%, a ratio (WS/WT) of a width (WS) of the outer surface of the outer center portion (48) to a width (WT) of the tread (4) is not less than 20% and not greater than 40%,
    when the nominal aspect ratio is not less than 45% and less than 60%, the ratio (WS/WT) of the width (WS) of the outer surface of the outer center portion (48) to the width (WT) of the tread (4) is not less than 30% and not greater than 60%, and
    when the nominal aspect ratio is less than 45%, the ratio (WS/WT) of the width (WS) of the outer surface of the outer center portion (48) to the width (WT) of the tread (4) is not less than 60% and not greater than 80%, wherein
    the loss tangents are measured according to the standards of JIS K6394 under the measurement conditions: Initial strain = 10%, Dynamic strain = ± 1%, Frequency = 10 Hz, Mode = stretch mode, and Temperature = 30°C;
    the nominal aspect ratio is the "nominal aspect ratio" included in "tyre designation" specified in JIS D4202 "Automobile tyres - Designation and dimensions"; and
    the width (WS) of the outer surface and the width (WT) of the tread (4) are measured in the axial direction in a standard state of the tire (2), wherein the tire is filled with 92% of a standardized internal pressure and no load is applied to the tire (2).

2. The tire (2) according to claim 1, wherein a ratio (TC/TA) of a thickness (TC) of the outer center portion (48) to a total thickness (TA) of the outer center portion (48) and the intermediate center portion (50) is not less than 50% and not greater than 70%.

3. The tire (2) according to claim 2, wherein a ratio (LTm/LTc) of the loss tangent (LTm) at 30°C of the intermediate rubber to the loss tangent (LTc) at 30°C of the cap rubber is not less than 50% and not greater than 70%.

**Patentansprüche**

1. Reifen (2), umfassend eine Lauffläche (4), die konfiguriert ist, um mit einer Straßenoberfläche an einer Laufflächenoberfläche (T) davon in Kontakt zu kommen, wobei

die Lauffläche (4) einen Deckgummi, einen Zwischengummi und einen Basisgummi mit unterschiedlichen Verlusttangens (LTc, LTm, LTb) umfasst,
der Verlusttangens (LTc) des Deckgummis höher als der Verlusttangens (LTm) des Zwischengummis ist,
der Verlusttangens (LTm) des Zwischengummis höher als der Verlusttangens (LTb) des Basisgummis ist,
die Lauffläche (4) einen Mittelabschnitt (44) und ein Paar Seitenabschnitte (46) umfasst, die axial außen von dem Mittelabschnitt (44) angeordnet sind,
der Mittelabschnitt (44) einen äußeren Mittelabschnitt (48), einen Zwischenmittelabschnitt (50), der radial innen von dem äußeren Mittelabschnitt (48) angeordnet ist, und einen inneren Mittelabschnitt (52), der radial innen von dem Zwischenmittelabschnitt (50) angeordnet ist, umfasst,
jeder der Seitenabschnitte (46) einen äußeren Seitenabschnitt (54) und einen inneren Seitenabschnitt (56), der radial innen von dem äußeren Seitenabschnitt (54) angeordnet ist, umfasst,
der äußere Mittelabschnitt (48) aus dem Deckgummi besteht,
der Zwischenmittelabschnitt (50) und die äußeren Seitenabschnitte (54) aus dem Zwischengummi bestehen,
der innere Mittelabschnitt (52) und die inneren Seitenabschnitte (56) aus dem Basisgummi bestehen, und
die Laufflächenoberfläche (T) eine Außenfläche des äußeren Mittelabschnitts (48) und Außenflächen der äußeren Seitenabschnitte (54) umfasst;

**dadurch gekennzeichnet, dass**

wenn ein Nennaspektverhältnis des Reifens (2) nicht weniger als 60 % beträgt, ein Verhältnis (WS/WT) einer Breite (WS) der Außenfläche des äußeren Mittelabschnitts (48) zu einer Breite (WT) der Lauffläche (4) nicht weniger als 20 % und nicht mehr als 40 % beträgt,
wenn das Nennaspektverhältnis nicht weniger als 45 % und weniger als 60 % beträgt, das Verhältnis (WS/WT) der Breite (WS) der Außenfläche des äußeren Mittelabschnitts (48) zu der Breite (WT) der Lauffläche (4) nicht weniger als 30 % und nicht mehr als 60 % beträgt, und
wenn das Nennaspektverhältnis weniger als 45 % beträgt, das Verhältnis (WS/WT) der Breite (WS) der Außenfläche des äußeren Mittelabschnitts (48) zu der Breite (WT) der Lauffläche (4) nicht weniger als 60 % und nicht mehr als 80 % beträgt,
wobei
die Verlusttangens gemäß den Normen von JIS K6394 unter den folgenden Messbedingungen gemessen sind: Anfangsdehnung = 10 %, dynamische Dehnung = ±1 %, Frequenz = 10 Hz, Modus = Streckmodus und Temperatur = 30 °C;
das Nennaspektverhältnis das "nominal aspect ratio" ist, das in "tyre designation" enthalten ist, die in JIS D4202 "Automobile tyres - Designation and dimensions" spezifiziert ist; und
die Breite (WS) der Außenfläche und die Breite (WT) der Lauffläche (4) in der axialen Richtung in einem Standardzustand des Reifens (2) gemessen sind, wobei der Reifen mit 92 % eines standardisierten Innendrucks befüllt ist und keine Last auf den Reifen (2) ausgeübt wird.

2. Reifen (2) nach Anspruch 1, wobei ein Verhältnis (TC/TA) einer Dicke (TC) des äußeren Mittelabschnitts (48) zu einer Gesamtdicke (TA) des äußeren Mittelabschnitts (48) und des mittleren Mittelabschnitts (50) nicht weniger als 50 % und nicht mehr als 70 % beträgt.

3. Reifen (2) nach Anspruch 2, wobei ein Verhältnis (LTm/LTc) des Verlusttangens (LTm) bei 30 °C des Zwischengummis zu dem Verlusttangens (LTc) bei 30 °C des Deckgummis nicht weniger als 50 % und nicht mehr als 70 % beträgt.

**Revendications**

1. Pneumatique (2) comprenant une bande de roulement (4) configurée pour venir en contact avec une surface routière au niveau d'une surface de bande de roulement (T) de celle-ci, dans lequel

la bande de roulement (4) inclut un caoutchouc de chape, un caoutchouc intermédiaire, et un caoutchouc de base ayant des tangentes de perte différentes (LTc, LTm, LTb),
la tangente de perte (LTc) du caoutchouc de chape est plus élevée que la tangente de perte (LTm) du caoutchouc intermédiaire,
la tangente de perte (LTm) du caoutchouc intermédiaire est plus élevée que la tangente de perte (LTb) du caoutchouc de base,
la bande de roulement (4) inclut une portion centrale (44) et une paire de portions latérales (46) situées axialement à l'extérieur de la portion centrale (44),
la portion centrale (44) inclut une portion centrale extérieure (48), une portion centrale intermédiaire (50) située radialement à l'intérieur de la portion centrale extérieure (48), et une portion centrale intérieure (52) située radialement à l'intérieur de la portion centrale intermédiaire (50),
chacune des portions latérales (46) inclut une portion latérale extérieure (54) et une portion latérale intérieure (56) située radialement à l'intérieur de la portion latérale extérieure (54),
la portion centrale extérieure (48) est composée du caoutchouc de chape, la portion centrale intermédiaire (50) et les portions latérales extérieures (54) sont composées du caoutchouc intermédiaire,
la portion centrale intérieure (52) et les portions latérales intérieures (56) sont composées du caoutchouc de base, et
la surface de bande de roulement (T) inclut une surface extérieure de la portion centrale extérieure (58) et des surfaces extérieures des portions latérales extérieures (54) ;
**caractérisé en ce que**
quand un rapport d'aspect nominal du pneumatique (2) n'est pas inférieur à 60 %, un rapport (WS/WT) d'une largeur (WS) de la surface extérieure de la portion centrale extérieure (48) sur une largeur (WT) de la bande de roulement (4) n'est pas inférieur à 20 % et n'est pas supérieur à 40 %, quand le rapport d'aspect nominal n'est pas inférieur à 45 % et n'est pas inférieur à 60 %, le rapport (WS/WT) de la largeur (WS) de la surface extérieure de la portion centrale extérieure (48) sur la largeur (WT) de la bande de roulement (4) n'est pas inférieur à 30 % et n'est pas supérieur à 60 %, et
quand le rapport d'aspect nominal n'est pas inférieur à 45 %, le rapport (WS/WT) de la largeur (WS) de la surface extérieure de la portion centrale extérieure (48) sur la largeur (WT) de la bande de roulement (4) n'est pas inférieur à 60 % et n'est pas supérieur à 80 %,
dans lequel
les tangentes de perte sont mesurées selon les standards de la norme industrielle japonaise JIS K6394 dans les conditions de mesurage suivantes : contrainte initiale = 10 %, contrainte dynamique = $\pm$ 1 %, fréquence = 10 Hz, mode = mode d'étirement, et température = 30 °C ;
le rapport d'aspect nominal est le « nominal aspect ratio » (rapport d'aspect nominal) inclus dans « tyre désignation » (désignation de pneumatique) spécifiée dans JIS D4202 « Automobile tyres - Designation and dimensions » (Pneumatiques automobiles - Désignation et dimensions) ; et
la largeur (WS) de la surface extérieure et la largeur (WT) de la bande de roulement (4) sont mesurées dans la direction axiale dans un état standard du pneumatique (2), dans lequel le pneumatique est rempli avec 92 % d'une pression interne standardisée et aucune charge n'est appliquée sur le pneumatique (2).

2. Pneumatique (2) selon la revendication 1, dans lequel un rapport (TC/TA) d'une épaisseur (TC) de la portion centrale extérieure (48) sur une épaisseur totale (TA) de la portion centrale extérieure (48) et de la portion centrale intermédiaire (50) n'est pas inférieur à 50 % et n'est pas supérieur à 70 %.

3. Pneumatique (2) selon la revendication 2, dans lequel un rapport (LTm/LTc) de la tangente de perte (LTm) à 30 °C du caoutchouc intermédiaire sur la tangente de perte (LTc) à 30 °C du caoutchouc de chape n'est pas inférieur à 50 % et n'est pas supérieur à 70 %.

# Fig.1

**Fig.2**

**Fig.3**

# Fig.4

**Fig.5**

**Fig.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018002008 A
- EP 3208110 A1
- WO 2021215279 A1
- EP 2565056 A1